# EUROPÄISCHE PATENTSCHRIFT

(11) **EP 3 381 290 B1**
(45) Veröffentlichungstag und Bekanntmachung des Hinweises auf die Patenterteilung: **06.01.2021**
(21) Anmeldenummer: 17179335.9
(22) Anmeldetag: 03.07.2017
(51) Int. Cl.: A21C 3/06, A21B 5/04

(54) **AUFWICKELMASCHINE FÜR TEIG**
WINDER FOR DOUGH
MACHINE ENROULEUSE POUR DE LA PÂTE

(30) Priorität: 30.03.2017 DE 102017003122
(43) Veröffentlichungstag der Anmeldung: 03.10.2018
(73) Patentinhaber: Koplar, Richard, 86911 Dießen am Ammersee (DE)
(72) Erfinder: Koplar, Richard, 86911 Dießen am Ammersee (DE)
(74) Vertreter: Mollekopf, Gerd Willi

(56) Entgegenhaltungen:
- EP-A1- 0 303 567
- CN-Y- 2 720 826
- ES-A1- 2 242 502
- ES-A1- 2 246 632
- JP-U- H0 574 285
- US-A1- 2015 132 460
- US-B1- 6 254 916
- "TRDLO Making", youtube, 29. Juni 2015 (2015-06-29), Seite 1 pp., XP054978009, Gefunden im Internet: URL:https://www.youtube.com/watch?v=ZXu9Z7 -23jk [gefunden am 2018-01-11]

## Beschreibung

Die Erfindung betrifft eine Aufwickelmaschine für Teig, insbesondere zum Aufwickeln von Teigstreifen zur Herstellung von Baumstriezeln oder von Kürtöskaläcs.

Baumstriezel ist ein Gebäck, das traditionell in Handarbeit zubereitet wird. Dazu werden Teigstreifen oder Teigstränge (z.B. aus Hefeteig) mit der Hand helixförmig auf eine zylindrische Walze aufgewickelt, so dass benachbarte Ränder des Teigstreifens sich zumindest berühren oder auch überlappen. Das Aufwickeln kann auch so erfolgen, dass benachbarte Streifenabschnitte zunächst beabstandet auf der Walze liegen. Anschließend wird der aufgewickelte Teig durch Rollen der Walze auf einer Unterlage geglättet, wodurch die nebeneinanderliegenden Streifenabschnitte gedrückt bzw. gewalkt werden und seitlich aneinander anliegen. Siehe z.B. https://www.youtube.com/watch?v=ZXu9Z 7-23jk. Durch das Glätten wird erreicht, dass eine möglichst gleichmäßig dicke Teigschicht auf der Walze vorliegt. Der Teig auf der Walze wird durch kontinuierliches Drehen vor einer Hitzequelle wie z.B. einem Elektrogrill, einem Gasgriff, einem Holzkohlegrill oder einer Feuerstelle gegart bzw. gebacken. Nachdem der Teig gar ist, wird er von der Walze gelöst, so dass ein hohles bzw. rohrförmiges Gebäckstück vorliegt. Das Aufwickeln des Teigs zur Herstellung von Baumstriezeln ist sehr zeitintensiv und erfordert einiges Geschick. Das hier als Baumstriezel bekannte Gebäck ist auch als Kürtöskaläcs bekannt.

Druckschrift CN 2720826 Y zeigt eine Vorrichtung zum Aufwickeln von Teigplatten auf eine Walze. Mehrere Anpressrollen sind umlaufend um die Walze angeordnet, um den Teig um die Walze zu führen. Die Anpressrollen weisen an ihrem Umfang längsverlaufende Rillen auf, die in die Innenverzahnung eines Getriebes eines die Anpressrollen umschließenden Rings eingreifen. Eine Teigplatte wird mittels eines Förderbandes der Vorrichtung bzw. Walze zugestellt und nach dem Aufwickeln wird die Geschwindigkeit reduziert, um den Teig zu kühlen und festwerden zu lassen.

Druckschrift EP 0 303 567 A1 zeigt eine Vorrichtung zum Aufhaspeln von Teig(bahnen) auf eine Haspel. Beim Aufwickeln der Teigbahnen wird mittels eines Förderbandes und einer Umlenkrolle der Teig an der Haspel gehalten. Die Umlenkrolle ist von einer Bereitschaftslage in eine Ruhelage schwenkbar. Um zu verhindern, dass bei wachsendem Durchmesser der aufgewickelten Teigbahnen die Teigbahnen aneinander gepresst werden und dadurch miteinander verkleben, wird die Umlenkrolle vom aufgewickelten Teig weg geschwenkt. Nachdem mehrere Wicklungen Teig auf die Haspel gewickelt wurden, können die Teigbahnen anschließend wieder abgewickelt bzw. abgehaspelt werden.

Druckschrift US 6,254,916 B1 zeigt eine Vorrichtung zur Herstellung von gebackenen Waffelröllchen. Flüssiger Teig wird auf eine beheizte Trommel gegossen und ein gebackener Waffelstreifen wird von der Oberfläche der Trommel mittels eines Messers abgehoben. Der Waffelstreifen wird mittels einer Aufwickelvorrichtung helixförmig auf eine Walze gewickelt, wobei durch die (schräge) Anordnung von Trommel und Walze ein fortlaufender endloser hohler Waffelkörper entsteht, der sich entlang der Achse der Walze fortbewegt. Der Hohlkörper wird anschließend in Stücke geschnitten. Verschiedene Rollen führen den Waffelstreifen entlang der Walze.

ES 2 242 502 Alzeigt eine Vorrichtung zur Herstellung von Keksen bzw. Waffelrollen. Dabei wird eine Teigbahn helixförmig auf eine rotierende Walze aufgewickelt. Der aufgewickelte Teig bzw. die Teigröhre wird mittels Antriebsrollen in Längsrichtung der Walze transportiert/geschoben. Die Zugkraft wirkt nur auf einen kleinen Teil der Teigröhre, um Falten oder Verformungen der Teigröhre zu verhindern. Die Walze ist beheizt, so dass darauf gewickelter Teig gegart wird. Am Ende der Walze wird die gebackene (Endlos-)Waffelröhre mittels eines rotierenden Messers in kurze Stücke geschnitten.

Es ist Aufgabe der Erfindung, eine Aufwickelmaschine für Teig bzw. ein Verfahren zum Aufwickeln von Teig bereitzustellen, die ein schnelles und einfaches Aufwickeln von Teig ermöglichen.

Diese Aufgabe wird mit den Merkmalen des Anspruchs 1 bzw. 13 gelöst. Vorteilhafte Ausgestaltungen sind Gegenstand der Unteransprüche.

Gemäß Anspruch 1 wird eine Aufwickelmaschine für Teig bzw. Teigstreifen bereitgestellt. Die Aufwickelmaschine weist auf: einen Grundkörper bzw. ein Gehäuse, eine Steuereinheit, eine am Grundkörper (bzw. Gehäuse) um eine Drehachse drehbar gelagerte Walze, einen von der Steuereinheit gesteuerten Motor (z.B. Elektromotor) zum rotierenden Antreiben der Walze und eine Anpresseinrichtung. Bei der Verwendung der Aufwickelmaschine sind auf die Walze Teigstreifen aufwickelbar bzw. werden auf die Walze Teigstreifen aufgewickelt. Der Teig wird helixförmig bzw. schraubenförmig aufgewickelt, so dass benachbarte bzw. nebeneinander liegende Teigränder aneinander anliegen oder auch überlappen können. Vorzugsweise ist nach dem Aufwickeln des/der Teigstreifen/s die gesamte (Mantelfläche der) Walze bzw. im Wesentlichen die gesamte (Mantelfläche der) Walze mit Teig umwickelt bzw. bedeckt.

Mittels der Anpresseinrichtung wird auf der Walze aufgewickelter Teig an die Walze angepresst/angedrückt. Die Anpresseinrichtung ist ausgebildet, gegen die Walze bzw. die Mantelfläche der Walze zu drücken/pressen, so dass bei der Verwendung auf der Walze aufgewickelter Teig gegen die Walze gedrückt und flachgewalzt wird. Das Flachwalzen bzw. Flachdrücken von aufgewickeltem Teig führt dazu, dass auf der Walze nebeneinander liegende Teigabschnitte beim anschließenden Backen zusammenbacken und beim Abstreifen des gebackenen Teigs von der Walze der gebackene Teig als ganzes Stück erhalten bleibt. Zum Verzehr lassen sich die Windungen jedoch leicht wieder voneinander lösen, so dass sich (z.B.) der Baumstriezel (Kürtöskaläcs) in kleine Portionen teilen lässt.

Die Anpresseinrichtung ist zustellbar oder schwenkbar bzw. drehbar am Grundkörper gelagert, so dass sie zum Anpressen von aufgewickeltem Teig an die Walze zur Walze hin zugestellt oder geschwenkt werden kann. Anstelle des Zustellens mittels Schwenkens kann ein Zustellen auch durch eine lineare Bewegung oder durch eine Kombination von Linear-und Schwenkbewegung der Anpresseinrichtung erfolgen.

Die Anpresseinrichtung ist vorzugsweise ein mit der Aufwickelmaschine verbundenes oder verbindbares Element. In Ausgestaltung kann die Anpresseinrichtung ein mit der Aufwickelmaschine nicht verbundenes Element sein, das zum Anpressen des aufgewickelten Teigs der in der Aufwickelmaschine gelagerten Walze manuell oder automatisch zugestellt wird. Vorzugsweise erfolgt die Zustellung der Anpresseinrichtung (unabhängig, ob diese an der Aufwickelmaschine gelagert ist oder nicht) zur in der Aufwickelmaschine gelagerten Walze manuell oder automatisch. Die automatische Zustellung kann mittels einer Zustelleinrichtung, die auf die Anpresseinrichtung wirkt, erfolgen.

Nachfolgend werden beispielhaft die Schritte eines Verfahrens zum Aufwickeln von Teig mit einer wie oben beschriebenen Aufwickelmaschine beschrieben:
- Rotieren bzw. Drehen der Walze in eine erste Rotationrichtung mittels des Motors,
- helixförmiges Aufwickeln eines Teigstreifens oder mehrerer Teigstreifen auf die rotierende Walze,
- Umkehr der Rotationsrichtung der Walze bzw. Rotieren der Walze in einer zweiten der ersten entgegengesetzten Rotationsrichtung,
- Andrücken des aufgewickelten Teigs an die Walze mittels der Anpresseinrichtung. Das Andrücken des Teigs kann erfolgen durch Zustellen oder Schwenken der Anpresseinrichtung zur Walze, so dass aufgewickelter Teig an die Walze gedrückt wird.

Nach dem Andrücken des Teigs an die Walze kann die Rotation der Walze gestoppt bzw. die Walze angehalten werden.

Das Aufwickeln des Teigs in einer Walzendrehrichtung und das Anpressen in der dazu entgegengesetzten Walzendrehrichtung bzw. die Richtungsumkehr der Rotationsrichtung gewährleistet eine bessere Haftung des Teigs an der Walze. Optional kann die Walze beim Anpressen/Andrücken in der gleichen Richtung gedreht werden bzw. rotieren wie beim Aufwickeln.

Die am Grundkörper bzw. Gehäuse gelagerte Walze ist manuell ausbaubar und einbaubar gelagert. Besonders vorteilhaft ist die Walze ohne Werkzeug ausbaubar und einbaubar. Auf diese Weise kann nach dem Aufwickeln von Teig auf die Walze die umwickelte Walze einfach und schnell mit der Hand aus der Maschine herausgenommen werden und eine neue (leere) Walze kann ebenso einfach und schnell eingesetzt und anschließend mit Teig umwickelt werden.

Vorzugsweise ist zum Übertragen des Drehmoments des Motors auf die Walze eine Motorwelle des Motors mit der Walze bzw. mit einer Walzenachse der Walze lösbar und form- und/oder kraft- und/oder reibschlüssig verbunden. Beispielsweise weist zum Übertragen des Drehmoments des Motors auf die Walze zumindest eine Seite/ein Ende der Walze bzw. der Walzenachse ein erstes Form- und/oder Kraft- und/oder Reibschlusselement auf, das in ein zweites Form- und/oder Kraftschlusselement des Motors bzw. der Motorwelle eingreift. Bevorzugt ist das erste Form- und/oder Kraftschlusselement mit dem zweiten Form- und/oder Kraftschlusselement manuell und/oder ohne Werkzeug wiederlösbar verbindbar. Beispielsweise kann die Walzenachse auf die Motorwelle gesteckt werden. Beispiele für mögliche Verbindungen zwischen Wellenachse und Motorwelle sind: Zapfenverbindung, Passfederverbindung, Keilwellenverbindung, Zahnwellenverbindung, Polygonwellenverbindung oder Stirnverzahnung vorgesehen.

Die Anpresseinrichtung weist zumindest eine um eine Drehachse drehbar gelagerte Anpressrolle auf, wobei die Rollendrehachse der zumindest einen Anpressrolle parallel oder im Wesentlichen parallel zur Walzendrehachse liegt. Beim Anpressen/Flachdrücken von aufgewickeltem Teig dreht sich die zumindest eine Anpressrolle mit bzw. die Anpressrolle rollt über den aufgewickelten Teig, so dass ein Anhaften des Teigs an der Rolle bzw. der Anpresseinrichtung verhindert wird.

Zusätzlich oder alternativ liegen die Mantelflächen der Walze und der zumindest einen Anpressrolle parallel zueinander, insbesondere in jeder Schwenkposition der Anpresseinrichtung. Dadurch wird ein gleichmäßiger Anpressdruck sowie eine gleichmäßige Dicke des Gebäcks gewährleistet, so dass der aufgewickelte Teig anschließend gleichmäßig bäckt. Die Walze und die Anpressrolle(n) können beispielsweise zylindrisch oder konisch ausgebildet sein.

Besonders bevorzugt weist die Anpresseinrichtung zumindest zwei Anpressrollen auf, vorzugsweise genau drei Anpressrollen, genau vier Anpressrollen oder genau fünf Anpressrollen. Alternativ weist die Anpresseinrichtung zwischen zwei und zehn Anpressrollen auf, vorzugsweise zwischen zwei und sieben Anpressrollen. Durch das Vorsehen von mehreren kleinen Anpressrollen wird der Anpressdruck der Anpresseinrichtung gleichmäßig verteilt, so dass der aufgewickelte Teig beim Andrücken/Anpressen nicht an den Rollen haften bleibt.

Vorteilhaft weist die Anpresseinrichtung eine Halterung auf, an der die zumindest eine Anpressrolle drehbar gelagert ist, wobei die Halterung schwenkbar/drehbar am Grundkörper gelagert ist. Beispielsweise weist die Halterung zwei Seitenteile auf, wobei die Anpressrolle(n) bzw. deren Achse(n) die beiden Seitenteile miteinander verbinden. Bevorzugt ist die Anpresseinrichtung manuell schwenkbar/drehbar, so dass der Anpressdruck auf den aufgewickelten Teig fein dosiert werden kann. Beispielsweise weist die Anpresseinrichtung dazu ein Griffelement auf.

Bevorzugt ist die Anpresseinrichtung, insbesondere ist die Halterung, mittels zumindest eines Federelements in Richtung der Walze vorgespannt. Durch das zumindest eine Federelement wird während des Anpressens/Flachdrückens ein gleichmäßiger Anpressdruck auf die Walze bzw. den aufgewickelten Teig gewährleistet. Das Vorsehen des Federelements ist jedoch optional.

Vorteilhaft ist die Anpresseinrichtung, insbesondere die Halterung, mittels zumindest eines Halteelements in einer beabstandet zur Walze liegenden Ruheposition fixierbar. Mittels des Halteelements wird verhindert, dass die Anpresseinrichtung unbeabsichtigt beim Aufwickeln von Teig oder beim Wechseln von Walzen in Richtung der Walze schwenkt. Beim Vorsehen des zumindest einen oben genannten Federelements hält das Halteelement die Anpresseinrichtung gegen den Druck des Federelements in der Ruheposition. Beispielsweise kann als Halteelement ein Sicherungsstift oder ein Rastelement vorgesehen sein.

Bevorzugt weist die Aufwickelmaschine ein erstes mit der Steuereinheit verbundenes Schaltelement zum Ein-/Ausschalten des Motors auf. Besonders bevorzugt ist das erste Schaltelement als Fußschalter bzw. Pedal ausgebildet, so dass ein Nutzer beim Benutzen der Aufwickelmaschine beide Hände frei hat, um den Teig beim Aufwickeln zu halten und zu führen.

Gemäß einer Ausgestaltung weist die Aufwickelmaschine ein zweites mit der Steuereinheit verbundenes Schaltelement zur Umkehr der Drehrichtung des Motors auf. Beispielsweise kann dieses Schaltelement als Schalter am Grundkörper oder Gehäuse ausgebildet sein oder ebenfalls als Fußschalter.

Besonders vorteilhaft weist die Aufwickelmaschine ein drittes mit der Steuereinheit verbundenes Regelelement zum Regeln der Drehgeschwindigkeit des Motors auf, insbesondere zum stufenlosen Regeln der Drehgeschwindigkeit. Auch in dieser Ausgestaltung kann das Regelelement bzw. der Geschwindigkeitsregler bzw. -stellelement mit dem Fuß bedienbar sein, so dass ein Nutzer während des Aufwickelns und Anpressen von Teig beide Hände frei hat. Beispielsweise kann so die Rotationsgeschwindigkeit der Walze je nach Konsistenz des zu verarbeitenden Teigs (stufenlos) angepasst werden. In Ausgestaltung ist der Ein-/Ausschalter für den Motor mit dem Geschwindigkeitsregler bzw. -stellelement gekoppelt, so dass mit nur einer Fußbewegung das Einschalten und Einstellen der Geschwindigkeit erfolgen kann.

Alternativ kann für das Aufwickeln von Teig eine erste (vorbestimmte) Rotationsgeschwindigkeit des Motors bzw. der Walze verwendet werden und für das Anpressen des aufgewickelten Teigs eine zweite (vorbestimmte)

Rotationsgeschwindigkeit. Beispielsweise ist die Geschwindigkeit beim Aufwickeln höher als beim Anpressen. Weiter alternativ können für das Aufwickeln und Anpressen die gleichen Geschwindigkeiten verwendet werden.

Die (vorzugsweise stufenlos regelbare oder vorbestimmte) Drehgeschwindigkeit der Motors kann in zumindest eine Drehrichtung zwischen 30-250 min⁻¹ (Umdrehungen / Minute), 60-200 min⁻¹, 80-150 min⁻¹, 90-130 min⁻¹ liegen, vorzugsweise bei maximal oder im Wesentlichen maximal 120 oder 180 min⁻¹ oder bei 180 ±20% 1/min.

Die Walze und/oder die Anpressrollen, insbesondere die mit Teig in Berührung kommenden (Außen-)Flächen der Walze und/oder der Anpressrollen, können aus zumindest einem der folgenden Materialien ausgebildet sein oder mit zumindest einem der folgenden Materialien beschichtet sein: Holz, Edelstahl, Kunststoff, Teflon, Keramik, Emaille, Silikon.

Ein Verfahren zum Aufwickeln von Teig mit einer wie oben beschriebenen Aufwickelmaschine kann folgende Schritte aufweisen:
- Einsetzen/Einbauen einer (leeren) Walze in die Aufwickelmaschine,
- Rotieren der Walze in eine erste Rotationrichtung mittels des Motors,
- helixförmiges Aufwickeln eines Teigstreifens oder mehrerer Teigstreifen auf die rotierende Walze,
- Rotieren der Walze in einer zweiten, der ersten entgegengesetzten Rotationsrichtung (Umkehr der Rotationsrichtung der Walze bzw. des Motors),
- Schwenken und/oder Zustellen einer Anpresseinrichtung zur Walze, so dass der aufgewickelte Teig durch die Anpresseinrichtung an die Walze gedrückt wird,
- Rotation der Walze stoppen (Anhalten der Walze),
- Ausbau der umwickelten Walze (und optional Einsetzen einer neuen(leeren) Walze).

Anhand der Figuren wird eine Ausführungsform der Erfindung näher erläutert. Es zeigen:
- Fig. 1: eine Perspektivansicht einer Teigaufwickelmaschine,
- Fig. 2: ein Blockdiagramm zur Darstellung der Funktionselemente der Aufwickelmaschine von Fig. 1,
- Fig. 3: eine perspektivische Explosionsansicht der Aufwickelmaschine von Fig. 1,
- Fig. 4: eine Perspektivansicht eines Teils der Aufwickelmaschine von Fig. 1, und
- Fig. 5a-d: schematische nicht maßstabsgerechte Perspektiv- und Seitenansichten einer Walze der Aufwickelmaschine von Fig. 1 während des Aufwickelns und Anpressens eines Teigstreifens.

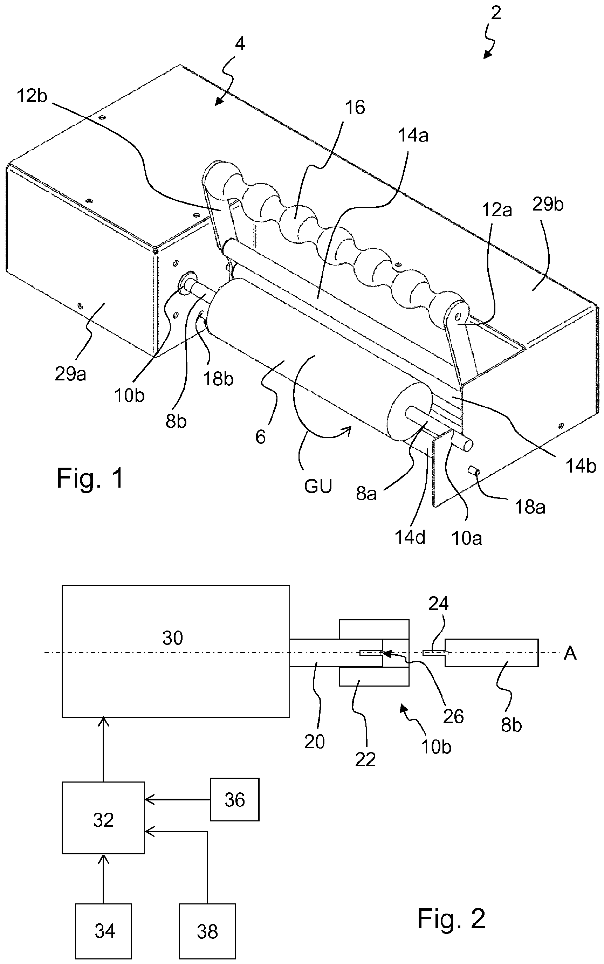

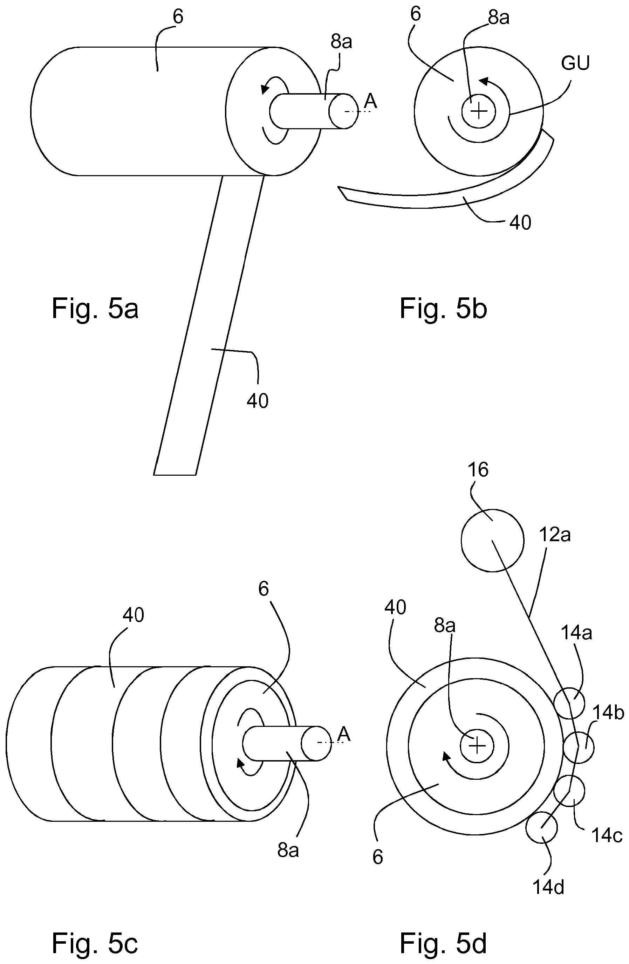

Fig. 1 zeigt eine Perspektivansicht einer Aufwickelmaschine 2 für Teig bzw. Teigstreifen 40 gemäß einer bevorzugten Ausgestaltung. Die Aufwickelmaschine 2 weist auf: einen Grundkörper 4, der in dieser Ausgestaltung als Gehäuse ausgebildet ist oder hierin auch als Gehäuse bezeichnet ist, und eine am Grundkörper gelagerte Walze 6 zum Aufwickeln von Teigstreifen. Die Enden 8a, 8b der Walzenachse sind in Lagern 10a, 10b um eine Walzendrehachse A (Fig. 5a) drehbar am Grundkörper 4 gelagert. Ein Ende 8b der Walzenachse ist mit einem (Elektro-) Motor 30 der Aufwickelmaschine 2 bzw. mit dessen Motorwelle 20 (Fig. 2) verbunden. Am äußeren Ende 8a der Walze 6 ist ein Walzengriff vorgesehen, der in den Figuren nicht dargestellt ist und zur Handhabung der Walze 6 dient. Beispielsweise zur Handhabung zum Einlegen und Entnehmen in und aus der Aufwickelmaschine 2 und zum Einlegen und Entnehmen in und aus einem Striezelbackofen.

Wie in Fig. 2 schematisch dargestellt, ist das Ende 8b der Walzenachse mit der Motorwelle 20 über eine formschlüssige Steckverbindung verbunden bzw. verbindbar, so dass das Drehmoment des Motors 30 auf die Walze 6 übertragen werden kann. Dazu ist an der Stirnseite des Walzenachsenendes 8b ein Zapfen 24 ausgebildet, der in einen entsprechenden Schlitz 26 an der Stirnseite der Motorwelle 20 eingreift. Eine an der Motorwelle 20 fixierte und über das Ende der Motorwelle 20 hinausragende Hülse 22 verhindert ein seitliches Verrutschen des Walzenachsenendes 8b, wenn die Steckverbindung zusammengesteckt ist. Die Steckverbindung gewährleistet, dass die Walze 6 einfach und schnell ein- und ausgebaut werden kann, insbesondere ohne dass Werkzeug benötigt wird. Anstelle der formschlüssigen Steckverbindung oder zusätzlich kann auch eine reibschlüssige und/oder kraftschlüssige Steckverbindung vorgesehen sein.

Das gegenüberliegende Ende 8a der Walzenachse ist in einem Lager 10a gehalten, das als eine nach oben offene (u-förmige) Aufnahme ausgebildet ist. Beim Einsetzten/Einbauen der Walze 6 in die Aufwickelmaschine 2 wird das Ende 8a der Walzenachse von oben in das Lager 10a gelegt. Im Zusammenwirken mit der oben beschriebenen Steckverbindung kann so die Walze 6 einfach und schnell ein- und ausgebaut werden.

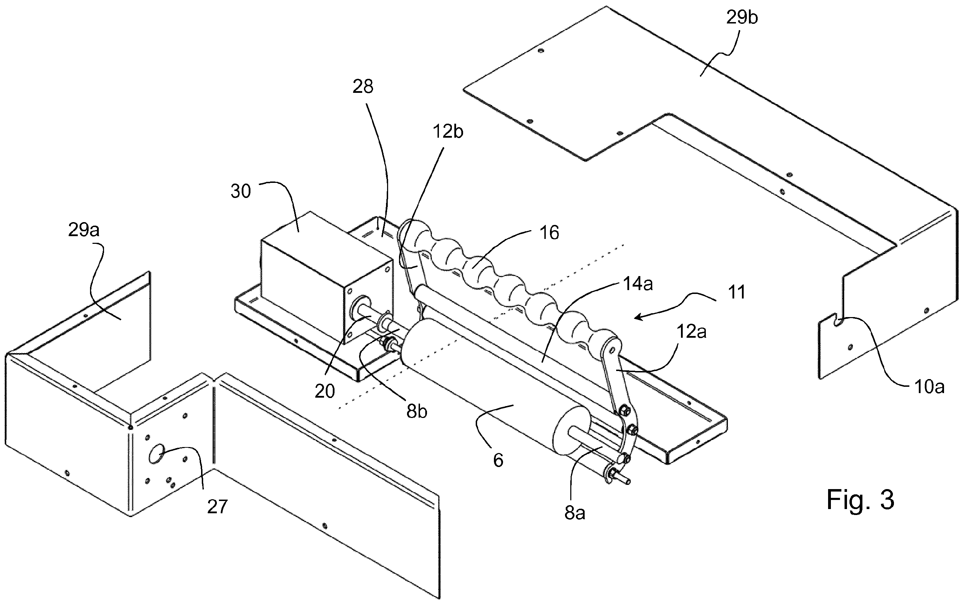

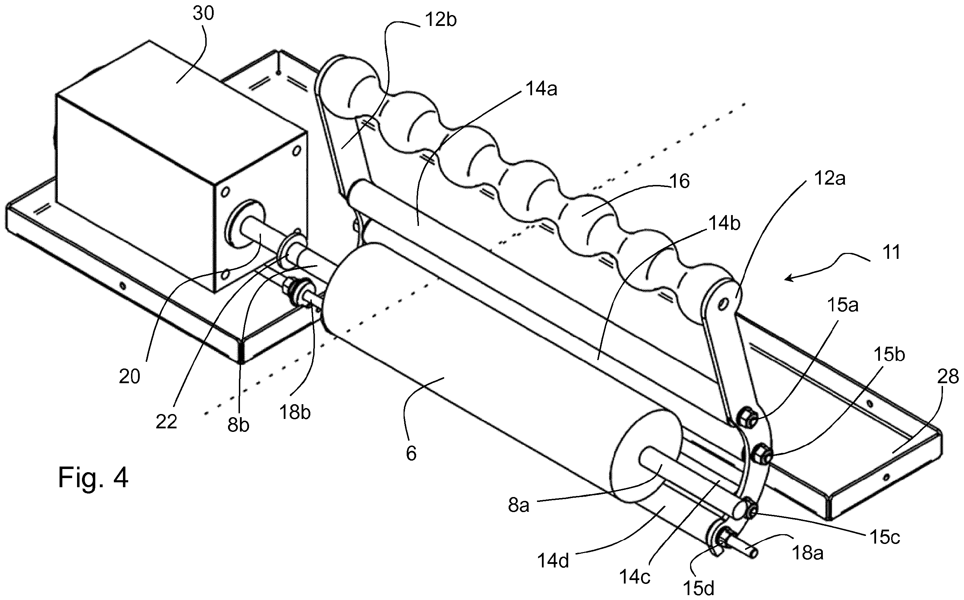

Wie in Fig. 3 und 4 im Detail dargestellt, weist die Aufwickelmaschine 2 weiterhin eine Anpresseinrichtung 11 auf, mittels der auf die Walze 6 aufgewickelter Teig flachgedrückt werden kann bzw. an die Walze 6 gedrückt werden kann. Die Anpresseinrichtung 11 weist vorzugsweise mehrere Anpressrollen 14a-d, eine Halterung mit zwei Seitenteilen 12a-b zum Fixieren der Rollen 14a-d und ein Griffelement 16 auf. Über die Rollenachsen 15a-d (Fig. 4) und das Griffelement 16 sind die zwei Seitenteile 12a-b der Halterung miteinander verbunden. Die Anpresseinrichtung 11 ist über zwei Lagerstifte 18a-b dreh- bzw. schwenkbar am Grundkörper 4 gelagert, so dass die Anpressrollen 14a-d zur Walze 6 geschwenkt werden können. Die zwei Lagerstifte 18a-b sind in dieser Ausgestaltung in Verlängerung der untersten Anpressrollenachse 14d ausgebildet.

Vorzugsweise liegen die Achsen 15a-d der Anpressrollen 14a-d (in jeder Schwenkposition) parallel zur Walzenachse der Walze 6. In dieser Ausgestaltung sind die Anpressrollen 14a-d und die Walze 6 zylindrisch ausgebildet, wobei die Mantelfläche der Walze 6 (in jeder Schwenkposition) parallel zu den Mantelflächen der Anpressrollen 14a-d liegt. Dadurch wird beim Anpressen von aufgewickeltem Teig der Anpressdruck gleichmäßig verteilt und eine gleichmäßige Dicke des flachgedrückten Teigs gewährleistet. Alternativ (nicht dargestellt) können sowohl die Walze als auch die Anpressrollen eine entlang der Walzenachse sich verjüngende Form, z.B. eine konische Form oder Kegelstumpf-Form, aufweisen, wobei auch in dieser Ausgestaltung die Mantelfläche der Walze (in jeder Schwenkposition) parallel zu den Mantelflächen der Anpressrollen liegt. Eine sich verjüngende, z.B. konische oder Kegelstumpf-Form der Walze erleichtert das Lösen des gebackenen Teigs von der Walze.

Die Walze 6 und/oder die Anpressrollen 14a-d, insbesondere die mit Teig in Berührung kommenden (Außen-)Flächen der Walze 6 und/oder der Anpressrollen 14a-d, können aus zumindest einem der folgenden Materialien ausgebildet sein oder mit zumindest einem der folgenden Materialien beschichtete sein: Holz, Edelstahl, Kunststoff, Teflon, Keramik, Emaille, Silikon. Besonders bevorzugt ist die Walze 6 und/oder sind die Anpressrollen 14a-d aus Holz oder Kunststoff ausgebildet.

Fig. 3 zeigt eine perspektivische Explosionsansicht der Aufwickelmaschine von Fig. 1. Der Grundkörper bzw. das äußeres Gehäuse 4 ist aus mehreren Elementen 28, 29a-b ausgebildet. Vorzugsweise wird als Material für das Gehäuse leicht zu reinigendes und stabiles Edelstahlblech verwendet. Alternativ kann Kunststoff verwendet werden. Auf einem Bodenteil 28 des Grundkörpers 4 ist der Motor 30 fixiert, ein vorderes

Gehäuseelement 29a liegt zur Vorderseite der Maschine 2 (zeigt zu einem Nutzer der Maschine 2) und weist eine Durchgangsöffnung 27 für die Motorwelle 20 auf. Ein hinteres Gehäuseelement 29b schließt den Grundkörper 4 nach hinten und oben ab. Alle Elemente 28, 29a-b sind miteinander verbunden und bilden den stabilen Grundkörper bzw. das stabile Gehäuse 4 für die Aufwickelmaschine 2.

Fig. 2 zeigt ein Blockdiagramm zur Darstellung der Funktionselemente einzelner Komponenten der Aufwickelmaschine 2 von Fig. 1. Über eine Steuerung 32 der Aufwickelmaschine 2 wird der Motor 30 gesteuert. Mit der Steuerung 32 sind ein erstes Schaltelement 34 (Ein-/Ausschalter) zum Ein- und Ausschalten des Motors 30, ein zweites Schaltelement 36 (Richtungswechsler) zum Umschalten der Drehrichtung des Motors 30 und optional ein Geschwindigkeitsregler 38 zum Einstellen einer gewünschten Rotationsgeschwindigkeit des Motors 30 verbunden. Vorzugsweise ist zumindest das zweite Schaltelement 36 (der Richtungswechsler) als Fußschalter ausgebildet, so dass ein Nutzer während der Verwendung der Aufwickelmaschine 2 beide Hände zur Handhabung des Teigs frei hat. Besonders bevorzugt ist aus dem gleichen Grund zusätzlich das erste Schaltelement 34 (der Ein-/Ausschalter) als Fußschalter ausgebildet. Alternativ kann das zweite Schaltelement 34 am Grundkörper 4 angeordnet sein.

Wie schematisch und nicht maßstabsgerecht in Fig. 5a-d dargestellt, wird nachfolgend beispielhaft die Verwendung der in Fig. 1 bis Fig. 4 dargestellten Aufwickelmaschine 2 beschrieben. Sofern nicht anders angegeben, entsprechen die in Bezug auf Fig. 5a-d dargestellten und beschriebenen Komponenten den oben in Bezug auf Fig. 1 bis Fig. 4 beschriebenen Komponenten der Aufwickelmaschine 2.

Sofern noch nicht vorhanden, wird in einem ersten Schritt eine (leere) Walze 6 in die Aufwickelmaschine 2 eingebaut, indem das eine Ende 8b der Walzenachse manuell in die oben beschriebene Steckverbindung eingesteckt und das andere Ende 8a der Walzenachse in das nach oben offene Lager 10a eingelegt wird. Anschließend wird der Motor 30 aktiviert bzw. eingeschalten, so dass er sich in eine erste Drehrichtung dreht (Fig. 5a). Die erste Drehrichtung bzw. der erste Drehsinn ist in Fig. 1 und 5b mit GU gekennzeichnet und ist bei Blick auf die rechte Seite der Aufwickelmaschine 2 gegen den Uhrzeigersinn.

Vorzugsweise verläuft die erste Drehrichtung GU gegen den Uhrzeigersinn (linksdrehend), so dass, wenn in einem anschließend Schritt ein Teigstreifen 40 an eine untere Seite der Walze 6 angelegt wird (Fig. 5b), der Teigstreifen 40 von unten nach hinten über die Rückseite der Walze 6 (von einem Nutzer aus gesehen) gezogen wird. Der Teigstreifen 40 wird solange helixförmig auf die rotierende Walze 6 gewickelt, bis die gesamte oder im Wesentlichen die gesamte Walze 6 mit Teig 40 bedeckt ist (Fig. 5c).

Anschließend wird nach dem Aufwickeln des Teigs auf die Walze die Drehrichtung des Motors 30 umgekehrt, so dass sich die Walze 6 im Uhrzeigersinn dreht (rechtsdrehend), und der aufgewickelte Teig 40 wird mittels der Anpresseinrichtung 11 an die Walze 6 gedrückt bzw. flachgedrückt. Wie in Fig. 5d mit der schematisch dargestellten Anpresseinrichtung (mit Anpressrollen 14a-d, Seitenteil 12a und Griff 16) gezeigt, wird die Anpresseinrichtung 11 um die Achse 15d der untersten Anpressrolle 14d geschwenkt, so dass alle oder im Wesentlichen alle Anpressrollen 14a-d den Teig 40 an die Walze 6 drücken. Die Umkehrung der Drehrichtung der Walze 6 beim Anpressen des Teigs verhindert ein Ankleben des aufgewickelten Teigs 40 an die Anpressrollen 14a-d.

Abschließend wird der Motor 30 angehalten bzw. ausgeschalten und die Walze 6 mit dem flachgedrückten Teig 40 aus der Aufwickelmaschine 2 ausgebaut. Der Teig 40 wird auf der Walze 6 durch Drehen über einer Hitzequelle (z.B. Elektrogrill, Gasgrill, Holzofengrill, offenes Feuer) gebacken und kann dann von der Walze 6 herunter geschoben werden.

Nach dem Ausbau der mit Teig umwickelten Walze 6 aus der Aufwickelmaschine 2 kann sofort eine neue (leere) Walze 6 eingebaut werden, die anschließend wieder wie oben beschrieben schnell und einfach mit Teig 40 umwickelt werden kann.

### Bezugszeichenliste

- 2: Aufwickelmaschine
- 4: Grundkörper / Gehäuse
- 6: Walze
- 8a-b: Ende der Walzenachse
- 10a-b: Walzenlager
- 11: Anpresseinrichtung
- 12a-b: Halterung Anpresseinrichtung
- 14a-d: Rolle
- 15a-d: Rollenachse
- 16: Griffelement
- 18a-b: Lagerstift Anpresseinrichtung
- 20: Motorwelle
- 22: Hülse
- 24: Zapfen
- 26: Schlitz
- 27: Durchgangsöffnung
- 28: Bodenelement
- 29a, 29b: Gehäuseelement
- 30: Motor
- 32: Steuerung
- 34: erstes Schaltelement / Ein-/Ausschalter
- 36: zweites Schaltelement / Richtungswechsel
- 38: Geschwindigkeitsregler
- 40: Teig / Teigstreifen
- A: Walzendrehachse
- GU: Drehrichtung gegen den Uhrzeigersinn

## Patentansprüche

1. Aufwickelmaschine (2) für Teig (40), insbesondere zum Aufwickeln von Teigstreifen, wobei die Aufwickelmaschine (2) aufweist:
einen Grundkörper (4),
eine Steuereinheit (32),
eine am Grundkörper (4) um eine Drehachse (A) drehbar gelagerte Walze (6),
einen Motor (30) zum rotierenden Antreiben der Walze (6), und
eine Anpresseinrichtung (11) zum Anpressen von auf der Walze (6) aufgerolltem Teig (40) an die Walze (6),
wobei bei Verwendung der Aufwickelmaschine (2) Teigstreifen (40) helixförmig auf die Walze (6) aufwickelbar sind, wobei
die Walze (6) am Grundkörper (4) manuell ausbaubar und einbaubar gelagert ist; und
die Anpresseinrichtung (11) zur Walze (6) zustellbar am Grundkörper (4) gelagert ist, insbesondere schwenkbar am Grundkörper (4) gelagert ist, so dass die Anpresseinrichtung (11) zum Anpressen von aufgewickeltem Teig (40) an die Walze (6) zur Walze (6) hin zustellbar ist,
wobei die Anpresseinrichtung (11) zumindest eine um eine Drehachse (15a-d) drehbar gelagerte Anpressrolle (14a-d) aufweist, und
wobei die Rollendrehachse (15a-d) parallel oder im Wesentlichen parallel zur Walzendrehachse (A) liegt, und/oder wobei die Mantelflächen der Walze (6) und der zumindest einen Anpressrolle (14a-d) parallel zueinander liegen.

2. Aufwickelmaschine nach Anspruch 1, wobei die Walze (6) ohne Werkzeug ausbaubar und einbaubar ist.

3. Aufwickelmaschine nach Anspruch 1 oder 2, wobei zum Übertragen des Drehmoments des Motors (30) auf die Walze (6) eine Motorwelle (20) des Motors (30) mit der Walze (6), insbesondere mit einer Walzenachse (8b) der Walze, lösbar und form-und/oder kraft- und/oder reibschlüssig verbunden ist.

4. Aufwickelmaschine nasch Anspruch 1, 2 oder 3, wobei zum Übertragen des Drehmoments des Motors (30) auf die Walze (6) zumindest ein Ende der Walze, insbesondere ein Ende der Walzenachse (8b), ein erstes Form- und/oder Kraft- und/oder Reibschlusselement (24) aufweist, das in ein zweites Form- und/oder Kraftschlusselement (26) des Motors (30), insbesondere der Motorwelle (20), form- und/oder kraft- und/oder reibschlüssig eingreift.

5. Aufwickelmaschine nach einem der vorhergehenden Ansprüche,
wobei vorzugsweise die Anpresseinrichtung (11) zumindest zwei Anpressrollen (14a-d) aufweist, vorzugsweise genau drei Anpressrollen, genau vier Anpressrollen oder genau fünf Anpressrollen, und/oder
wobei die Anpresseinrichtung (11) zwischen zwei und zehn Anpressrollen (14a-d) aufweist, vorzugsweise zwischen zwei und sieben Anpressrollen.

6. Aufwickelmaschine nach einem der vorhergehenden Ansprüche,
wobei die Anpresseinrichtung (11) eine Halterung (12a-b) aufweist, an der zumindest eine Anpressrolle (14a-d) oder die zumindest eine Anpressrolle (14a-d) drehbar gelagert ist, und wobei die Halterung (12a-b) zustellbar oder schwenkbar/drehbar am Grundkörper (4) gelagert ist.

7. Aufwickelmaschine nach einem der vorhergehenden Ansprüche,
wobei die Anpresseinrichtung (11) schwenkbar ist, insbesondere ein Griffelement (16) zum manuellen Schwenken aufweist, und/oder
wobei die Anpresseinrichtung, insbesondere die Halterung (12a-b), mittels zumindest eines Federelements in Richtung der Walze (6) vorgespannt ist, und/oder
wobei die Anpresseinrichtung (11), insbesondere die Halterung (12a-b), mittels zumindest eines Halteelements in einer Ruheposition, die beabstandet zur Walze (6) liegt, fixierbar ist.

8. Aufwickelmaschine nach einem der vorhergehenden Ansprüche,
wobei die Aufwickelmaschine (2) ein erstes mit der Steuereinheit (32) verbundenes Schaltelement (34) zum Ein-/Ausschalten des Motors (30) aufweist, und wobei insbesondere das erste Schaltelement (34) als Pedal ausgebildet ist, und/oder
wobei die Aufwickelmaschine (2) ein zweites mit der Steuereinheit (32) verbundenes Schaltelement (36) zur Umkehr der Drehrichtung des Motors (30) aufweist.

9. Aufwickelmaschine nach einem der vorhergehenden Ansprüche, wobei die Aufwickelmaschine (2) ein mit der Steuereinheit (32) verbundenes Regelelement (38) zum Regeln der Drehgeschwindigkeit des Motors (30) aufweist, insbesondere zum stufenlosen Regeln der Drehgeschwindigkeit.

10. Aufwickelmaschine nach einem der vorhergehenden Ansprüche,
wobei die Drehgeschwindigkeit des Motors (30) in zumindest eine Drehrichtung zwischen 30-250 min⁻¹, 60-200 min⁻¹, 80-150 min⁻¹, 90-130 min⁻¹, vorzugsweise maximal oder im Wesentlichen maximal 120 min⁻¹ oder 180 ± 20% min⁻¹ beträgt, und/oder
wobei der Motor (30) ein Elektromotor ist.

11. Aufwickelmaschine nach einem der vorhergehenden Ansprüche,
wobei die Walze (6) und die zumindest eine Anpressrolle (14a-d) eine der folgenden Formen aufweist: zylinderförmig, konisch, kegelstumpfförmig.

12. Aufwickelmaschine nach einem der vorhergehenden Ansprüche, wobei die Walze (6) und/oder die Anpressrollen (14a-d), insbesondere die mit Teig in Berührung kommenden Flächen der Walze (6) und/oder der Anpressrollen (14a-d), aus zumindest einem der folgenden Materialien ausgebildet sind oder mit zumindest einem der folgenden Materialien beschichtete sind: Holz, Edelstahl, Kunststoff, Teflon, Keramik, Emaille, Silikon.

13. Verfahren zum Aufwickeln von Teig (40) mit einer Aufwickelmaschine (2) nach einem der vorhergehenden Ansprüche, mit den Schritten:
Rotieren der Walze (6) in eine erste Rotationrichtung (GU) mittels des Motors (30),
helixförmiges Aufwickeln eines Teigstreifens (40) oder mehrerer Teigstreifen auf die Walze (6),
Rotieren der Walze (6) in einer zweiten der ersten entgegengesetzten Rotationsrichtung,
Schwenken der Anpresseinrichtung (11) oder Zustellen der Anpresseinrichtung mit der zumindest einen drehbar gelagerten Anpressrolle (14a-d) zur Walze (6), so dass der aufgewickelte Teig (40) an die Walze (6) gedrückt wird, und
Stoppen der Rotation der Walze (6), wobei vorzugsweise nach dem Stoppen der Rotation der mit Teig (40) umwickelten Walze (6), die Walze (6) ausgebaut und eine weitere leere Walze (6) eingebaut wird.

## Claims

1. Winding machine (2) for dough (40), in particular for winding strips of dough, wherein the winding machine (2) comprises:
a base body (4),
a control unit (32),
a roller (6) rotatably supported on the base body (4) around a rotation axis (A),
a motor (30) for rotatably driving the roller (6), and
a press-on assembly (11) for pressing dough (40) rolled on the roller (6) against the roller (6),
wherein, when using the winding machine (2), dough strips (40) are windable helically onto the roller (6),
wherein the roller (6) is mounted on the base body (4) manually removable and installable; and
the press-on assembly (11) is mounted on the base body (4) adjustably towards the roller (6), in particular is mounted pivotably on the base body (4) so that the press-on assembly (11) is adjustable towards the roller (6) for pressing rolled up dough (40) against the roller (6),
wherein the press-on assembly (11) comprises at least one press-on roller (14a-d) rotatably mounted around a rotation axis (15a-d), and
wherein the roller rotation axis (15a-d) is parallel or substantially parallel to the roller rotation axis (A), and/or wherein the lateral surfaces of the roller (6) and of the at least one press-on roller (14a-d) are parallel to each other.

2. Winding machine according to claim 1, wherein the roller (6) is removable and installable without tools.

3. Winding machine according to claim 1 or 2, wherein, for transmitting the torque of the motor (30) to the roller (6), a motor shaft (20) of the motor (30) is detachably connected to the roller (6), in particular to a roller axis (8b) of the roller, and is connected with form-locking and/or force-locking and/or friction-locking.

4. Winding machine according to claim 1, 2 or 3, wherein, for transmitting the torque of the motor (30) to the roller (6), at least one end of the roller, in particular one end of the roller axis (8b), comprises a first form-locking and/or force-locking and/or friction-locking element (24) which engages in a form-locking and/or force-locking and/or friction-locking manner in a second form-locking and/or force-locking element (26) of the motor (30), in particular of the motor shaft (20).

5. Winding machine according to one of the preceding claims,
wherein preferably the press-on assembly (11) comprises at least two press-on rollers (14a-d), preferably exactly three press-on rollers, exactly four press-on rollers or exactly five press-on rollers, and/or
wherein the press-on assembly (11) comprises between two and ten press-on rollers (14a-d), preferably between two and seven press-on rollers.

6. Winding machine according to any of the preceding claims,
wherein the press-on assembly (11) comprises a holder (12a-b) on which at least one press-on roller (14a-d) or the at least one press-on roller (14a-d) is rotatably supported, and wherein the holder (12a-b) is adjustably or pivotably/rotatably supported on the base body (4).

7. Winding machine according to one of the preceding claims,
wherein the press-on assembly (11) is pivotable, in particular comprises a handle element (16) for manual pivoting, and/or
wherein the press-on assembly, in particular the holder (12a-b), is forward biased in the direction of the roller (6) by means of at least one spring element, and/or
wherein the press-on assembly (11), in particular the holder (12a-b), is fixable by means of at least one holding element in a rest position which is spaced from the roller (6).

8. Winding machine according to one of the preceding claims,
wherein the winding machine (2) comprises a first switching element (34) connected to the control unit (32) for switching the motor (30) on and off, and wherein in particular the first switching element (34) is designed as a pedal, and/or
wherein the winding machine (2) comprises a second switching element (36) connected to the control unit (32) for reversing the direction of rotation of the motor (30).

9. Winding machine according to one of the preceding claims, wherein the winding machine (2) comprises a control element (38) connected to the control unit (32) for controlling the rotational speed of the motor (30), in particular for steplessly variable controlling the rotational speed.

10. Winding machine according to one of the preceding claims,
wherein the rotational speed of the motor (30) in at least one direction of rotation is between 30-250 min⁻¹, 60-200 min⁻¹, 80-150 min⁻¹, 90-130 min⁻¹, preferably maximal or substantially maximal 120 min⁻¹ or 180 ± 20% min⁻¹, and/or
where the motor (30) is an electric motor.

11. Winding machine according to one of the preceding claims,
wherein the roller (6) and the at least one press-on roller (14a-d) comprise one of the following shapes: cylindrical, conical, truncated conical.

12. Winding machine according to any of the preceding claims, wherein the roller (6) and/or the press-on rollers (14a-d), in particular the surfaces of the roller (6) and/or the press-on rollers (14a-d) coming into contact with dough, are made of at least one of the following materials or are coated with at least one of the following materials: wood, stainless steel, plastic, teflon, ceramics, enamel, silicone.

13. Method for winding dough (40) with a winding machine (2) according to one of the preceding claims, comprising the steps of:
rotating the roller (6) in a first direction of rotation (GU) by means of the motor (30),
helical winding of a strip of dough (40) or several strips of dough onto the roller (6),
rotating the roller (6) in a second direction of rotation opposite to the first direction of rotation,
pivoting the press-on assembly (11) or advancing the press-on assembly with the at least one rotatably mounted press-on roller (14a-d) towards the roller (6) such that the rolled up dough (40) is pressed against the roller (6), and
stopping the rotation of the roller (6), wherein preferably after stopping the rotation of the roller (6) wrapped with dough (40), the roller (6) is removed and another empty roller (6) is installed.

## Revendications

1. Machine enrouleuse (2) pour de la pâte (40), en particulier pour enrouler des bandes de pâte, la machine enrouleuse (2) comportant :
un corps de base (4),
une unité de commande (32),
un rouleau (6) monté en rotation sur le corps de base (4) autour d'un axe de rotation (A), un moteur (30) pour entraîner le rouleau (6) en rotation, et
un dispositif de pression (11) pour presser contre le rouleau (6) la pâte (40) enroulée sur le rouleau (6),
dans laquelle lors de l'utilisation de la machine enrouleuse (2), des bandes de pâte (40) peuvent être enroulées sur le rouleau (6) de manière hélicoïdale,
dans laquelle
le rouleau (6) est monté sur le corps de base (4) de sorte qu'il puisse être retiré et installé manuellement ; et
le dispositif de pression (11) est monté sur le corps de base (4) de sorte qu'il peut être approché du rouleau (6), en particulier il est monté de manière pivotante sur le corps de base (4), de sorte que le dispositif de pression (11) pour presser la pâte enroulée (40) sur le rouleau (6) peut être approché du rouleau (6),
dans laquelle le dispositif de pression (11) comporte au moins un rouleau de pression (14a-d) monté en rotation autour d'un axe de rotation (15a-d), et
dans laquelle l'axe de rotation du rouleau (15a-d) est parallèle ou sensiblement parallèle à l'axe de rotation du rouleau (A), et/ou les surfaces extérieures du rouleau (6) et de l'au moins un rouleau de pression (14a-d) sont parallèles l'une à l'autre.

2. Machine enrouleuse selon la revendication 1, dans laquelle le rouleau (6) peut être retiré et installé sans outil.

3. Machine enrouleuse selon la revendication 1 ou 2, dans laquelle pour transmettre le couple du moteur (30) au rouleau (6) un arbre de moteur (20) du moteur (30) est relié au rouleau (6), en particulier à un axe de rouleau (8b) du rouleau, de manière amovible et par complémentarité de forme et/ou par liaison de force et/ou par friction.

4. Machine enrouleuse selon la revendication 1, 2 ou 3, dans laquelle pour transmettre le couple du moteur (30) au rouleau (6) au moins une extrémité du rouleau, en particulier, une extrémité de l'axe du rouleau (8b) comporte un premier élément de complémentarité de forme et/ou de liaison de force et/ou de friction (24) qui vient en prise dans un second élément de complémentarité de forme et/ou de liaison de force (26) du moteur (30), en particulier de l'arbre du moteur (20), par complémentarité de forme et/ou par liaison de force et/ou par friction.

5. Machine enrouleuse selon l'une des revendications précédentes,
dans laquelle le dispositif de pression (11) comporte de préférence au moins deux rouleaux de pression (14a-d), de préférence exactement trois rouleaux de pression, exactement quatre rouleaux de pression ou exactement cinq rouleaux de pression, et/ou
dans laquelle le dispositif de pression (11) comporte entre deux et dix rouleaux de pression (14a-d), de préférence entre deux et sept rouleaux de pression.

6. Machine enrouleuse selon l'une des revendications précédentes,
dans laquelle le dispositif de pression (11) comporte un support (12a-b) sur lequel au moins un rouleau de pression (14a-d) ou l'au moins un rouleau de pression (14a-d) est monté en rotation, et dans laquelle le support (12a-b) peut être approché ou est monté de manière pivotante/en rotation sur le corps de base (4).

7. Machine enrouleuse selon l'une des revendications précédentes,
dans laquelle le dispositif de pression (11) peut pivoter, en particulier comporte un élément de préhension (16) pour un pivotement manuel, et/ou
dans laquelle le dispositif de pression, en particulier le support (12a-b), est précontraint en direction du rouleau (6) au moyen d'au moins un élément à ressort, et/ou
dans laquelle le dispositif de pression (11), en particulier le support (12a-b), peut être fixé au moyen d'au moins un élément de maintien dans une position de repos espacée du rouleau (6).

8. Machine enrouleuse selon l'une des revendications précédentes,
la machine enrouleuse (2) comportant un premier élément de commutation (34) relié à l'unité de commande (32) pour allumer/éteindre le moteur (30), et en particulier le premier élément de commutation (34) étant conçu comme une pédale, et/ou
la machine enrouleuse (2) comportant un second élément de commutation (36) relié à l'unité de commande (32) pour inverser le sens de rotation du moteur (30).

9. Machine enrouleuse selon l'une des revendications précédentes, la machine enrouleuse (2) comportant un élément de régulation (38) relié à l'unité de commande (32) pour réguler la vitesse de rotation du moteur (30), en particulier pour réguler en continu la vitesse de rotation.

10. Machine enrouleuse selon l'une des revendications précédentes,
dans laquelle la vitesse de rotation du moteur (30) dans au moins un sens de rotation est comprise entre 30 et 250 min⁻¹, 60 et 200 min⁻¹, 80 et 150 min⁻¹, 90 et 130 min⁻¹, de préférence un maximum ou sensiblement un maximum de 120 min⁻¹ ou 180 ± 20 % min⁻¹, et/ou
dans laquelle le moteur (30) est un moteur électrique.

11. Machine enrouleuse selon l'une des revendications précédentes,
dans laquelle le rouleau (6) et l'au moins un rouleau de pression (14a-d) ont l'une des formes suivantes : cylindrique, conique, tronconique.

12. Machine enrouleuse selon l'une des revendications précédentes, dans laquelle le rouleau (6) et/ou les rouleaux de pression (14a-d), en particulier les surfaces du rouleau (6) et/ou des rouleaux de pression (14a-d) qui entrent en contact avec la pâte, sont constitués d'au moins l'un des matériaux suivants ou sont revêtus d'au moins l'un des matériaux suivants : bois, acier inoxydable, plastique, téflon, céramique, émail, silicone.

13. Procédé d'enroulement de pâte (40) au moyen d'une machine enrouleuse (2) selon l'une des revendications précédentes, comprenant les étapes :
de rotation du rouleau (6) dans un premier sens de rotation (GU) au moyen du moteur (30), d'enroulement hélicoïdal d'une bande de pâte (40) ou de plusieurs bandes de pâte sur le rouleau (6),
de rotation du rouleau (6) dans un second sens de rotation opposé au premier,
de pivotement du dispositif de pression (11) ou d'approche du dispositif de pression du rouleau (6) avec l'au moins un rouleau de pression (14a-d) monté en rotation, de sorte que la pâte enroulée (40) est pressée contre le rouleau (6), et
d'arrêt de la rotation du rouleau (6), dans lequel de préférence après l'arrêt de la rotation du rouleau (6) enveloppé de pâte (40), le rouleau (6) est retiré et un autre rouleau vide (6) est installé.
